# NEUE EUROPÄISCHE PATENTSCHRIFT

(11) **EP 1 512 214 B2**
(45) Veröffentlichungstag und Bekanntmachung des Hinweises auf die Entscheidung über den Einspruch: **16.02.2022**
(45) Hinweis auf die Patenterteilung: 20.04.2011
(21) Anmeldenummer: 03737935.1
(22) Anmeldetag: 06.06.2003
(51) Int. Cl.: H02M 1/12, H02M 1/44

(54) **STROMKOMPENSIERTE DROSSEL UND SCHALTUNGSANORDNUNG MIT DER STROMKOMPENSIERTEN DROSSEL**
CURRENT-COMPENSATED CHOKE AND CIRCUIT ARRANGEMENT COMPRISING THE CURRENT-COMPENSATED CHOKE
BOBINE A COMPENSATION DE COURANT ET CIRCUIT COMPRENANT CETTE BOBINE A COMPENSATION DE COURANT

(30) Priorität: 07.06.2002 DE 10225409
(43) Veröffentlichungstag der Anmeldung: 09.03.2005
(73) Patentinhaber: TDK Electronics AG, 81671 München (DE)
(72) Erfinder: BRUNEL, Roman, 89173 Lonsee/Halzhausen (DE); KARASEK, Manfred, 89555 Steinheim (DE)
(74) Vertreter: Epping - Hermann - Fischer
(86) Internationale Anmeldenummer: PCT/DE2003/001894
(87) Internationale Veröffentlichungsnummer: WO 2003/105328

(56) Entgegenhaltungen:
- EP-A- 0 930 695
- WO-A-00/51225
- DE-B4- 19 843 465
- US-A- 4 760 356
- US-A1- 2002 130 649
- US-B1- 6 288 915
- PATENT ABSTRACTS OF JAPAN vol. 1998, no. 09, 31. Juli 1998 (1998-07-31) & JP 10 094244 A (OKAYAMA UNIV), 10. April 1998 (1998-04-10)
- OGASAWARA S ET AL: "Measurement and reduction of EMI radiated by a PWM inverter-fed AC motor drive system" INDUSTRY APPLICATIONS CONFERENCE, 1996. THIRTY-FIRST IAS ANNUAL MEETING, IAS '96., CONFERENCE RECORD OF THE 1996 IEEE SAN DIEGO, CA, USA 6-10 OCT. 1996, NEW YORK, NY, USA,IEEE, US, 6. Oktober 1996 (1996-10-06), Seiten 1072-1079, XP010201427 ISBN: 0-7803-3544-9

## Beschreibung

Die Erfindung betrifft eine stromkompensierte Drossel mit wenigstens zwei auf einem gemeinsamen Kern angeordneten Wicklungen, die jeweils einen Eingang und einen Ausgang aufweisen, und mit einer zusätzlichen Hilfswicklung, die einen Eingang und einen Ausgang aufweist.

Stromkompensierte Drosseln werden üblicherweise zwischen ein Netz und ein von dem Netz mit Strom versorgtes elektrisches Gerät geschaltet. Durch diese Drosseln sollen die Funkstörungen aus dem Gerät in das Netz vermindert werden. Stromkompensierte Drosseln der eingangs genannten Art werden vorzugsweise zur Dämpfung von asymmetrischen Störströmen verwendet, die beispielsweise von einem Frequenzumrichter in das Versorgungsnetz eingespeist werden könnten. Allgemein hat jedes an ein Versorgungsnetz angeschlossene Gerät Rückwirkungen auf das Versorgungsnetz. Bei hochfrequenten Rückwirkungen spricht man von Funkstörungen.

Aus der Druckschrift DE 295 06 951 U1 ist eine stromkompensierte Drossel der eingangs genannten Art bekannt, bei der zwischen dem Eingang und dem Ausgang der Hilfswicklung ein elektrischer Widerstand geschaltet ist. Mit der Hilfswicklung wird der Zweck verfolgt, asymmetrische Ströme zu reduzieren, indem der an die Anschlüsse der Hilfswicklung angeschlossene Widerstand mit dem Quadrat des Übersetzungsverhältnisses in den Pfad des asymmetrischen Störstromes transformiert. Die Einkopplung des Widerstandes in den asymmetrischen Strompfad verhindert den Anstieg des asymmetrischen Störstromes auf zu hohe Werte und somit die Sättigung des Drosselkernes.

Die bekannte stromkompensierte Drossel hat den Nachteil, daß die die Induktivität der Drossel senkende Wirkung der Hilfswicklung unabhängig von der Frequenz und auch unabhängig von dem durch die Drossel fließenden asymmetrischen Strom stattfindet (R = konstant). Somit wird der Widerstand nicht nur von Stromspitzen, sondern ständig belastet und muß für entsprechend hohe Belastungen ausgelegt werden. Außerdem wird die Induktivität der Drossel auch bei kleinen asymmetrischen Strömen, bei denen die Sättigung des Kerns noch kein Problem darstellt, vermindert, wodurch die Entstörwirkung der Drossel verschlechtert wird. Ferner ist die Wirkung der Hilfswicklung auch unabhängig von der verwendeten Frequenz, so daß der Widerstand zusätzlich die von Störströmen erzeugte Verlustleistung aufnehmen muß, welche in einem Frequenzbereich auftreten, wo sie kritische Werte nicht übersteigen.

Des Weiteren sind aus den Druckschriften EP-A-0 930 695 und JP 10 094244 A Transformatoren bekannt.

Aus den Druckschriften EP 1211788 A1 und WO 97/21264 sind stromkompensierte Drosseln mit einer Hilfswicklung bekannt, die eine Impedanz umfassen. Darüber hinaus sind aus den Druckschriften DE 198 43 465 B4 und US 4 760 356 stromkompensierte Drosseln bekannt, bei der eine Hilfswicklung eine seriell verschaltete Induktivität und Kapazität umfasst.

Ziel der vorliegenden Erfindung ist es daher, eine Schaltungsanordnung mit einer Drossel der eingangs benannten Art bereitzustellen, die eine verbesserte Entstörwirkung aufweist.

Dieses Ziel wird erfindungsgemäß durch eine Schaltungsanordnung mit einer stromkompensierten Drossel nach Patentanspruch l erreicht. Eine vorteilhafte Ausgestaltung der Erfindung ist dem weiteren Patentanspruch zu entnehmen.

Die Erfindung gibt eine Schaltungsanordnung mit einer stromkompensierten Drossel an, die wenigstens zwei auf einem gemeinsamen Kern angeordnete Wicklungen aufweist, die jeweils einen Eingang und einen Ausgang aufweisen. Des weiteren weist die erfindungsgemäße Drossel eine zusätzliche Hilfswicklung auf, die auf dem Kern der Drossel angeordnet ist und die einen Eingang sowie einen Ausgang aufweist.

Ein spezieller Wicklungssinn ist dabei nicht erforderlich. Am einfachsten ist es, wenn alle Wicklungen inklusive der Hilfswicklung gleichsinnig auf den Kern aufgetragen werden. Die Wicklungen könnten aber auch gegensinnig aufgetragen werden. Zwischen dem Eingang und dem Ausgang der Hilfswicklung ist eine sich ändernde Impedanz geschaltet, deren Wert sich durch Einflußgrößen wie z.B. Störstrom oder Frequenz verändert.

Der asymmetrische Störstrom erzeugt im Kern der erfindungsgemäßen Drossel einen magnetischen Fluß. Dieser bewirkt einen Stromfluß in der Hilfswicklung und damit auch durch die an die Hilfswicklung angeschlossene Impedanz. Der Wert dieser Impedanz ändert sich im Gegensatz zu der aus DE 295 06 951 U1 bereits bekannten Drossel, in Abhängigkeit des durch sie fließenden Stromes und/oder dessen Frequenz. Diese Impedanz wird wiederum mit dem Quadrat des Übersetzungsverhältnisses in den Pfad des Störstromes transformiert.

Die sich ändernde Impedanz kann beispielsweise so gewählt werden, daß sie bei geringen Strömen klein und bei hohen Strömen groß ist. Dadurch ergibt sich für die erfindungsgemäße Drossel der Vorteil, daß bei kleinen asymmetrischen Strömen die Induktivität der Drossel noch nicht vermindert wird, wodurch die Entstörwirkung der verbessert wird.

Darüber hinaus kann die sich ändernde Impedanz auch so ausgeführt sein, daß sie sich in Abhängigkeit von der Frequenz verändert. Beispielsweise ist es möglich, eine Impedanz vorzusehen, die bei geringen Frequenzen eine kleine Impedanz und bei hohen Frequenzen eine große Impedanz hat. Dies hat den Vorteil, daß die erfindungsgemäße Drossel beziehungsweise die sich ändernde Impedanz nur dann die von Störströmen erzeugte Verlustleistung aufnehmen muß, wenn sie in einem kritischen, hohen Frequenzbereich auftreten.

In einem nicht-erfindungsmäßen Beispiel kann die veränderbare Impedanz ein Serienschwingkreis aus einer Kapazität und einer Induktivität sein. Ein Serienschwingkreis aus einer Kapazität und einer Induktivität weist bei einer durch die Werte der Kapazität bzw. der Induktivität gegebenen Frequenz f₀ eine sehr geringe Impedanz auf, wodurch eine Sättigung der Drossel insbesondere bei der Frequenz f₀ bzw. nahe bei der Frequenz f₀ wirksam vermindert werden kann.

Gemäß der Erfindung ist die sich ändernde Impedanz ein Parallelschwingkreis aus einer Kapazität und einer Induktivität. Ein Parallelschwingkreis aus einer Kapazität und einer Induktivität hat bei einer durch die Kapazität und die Induktivität gegebenen Frequenz f₀ eine hohe Impedanz. Dadurch kann für alle Frequenzen außer im Bereich der Frequenz f₀ eine Sättigung des Kerns der Drossel vermindert werden, was beispielsweise von Vorteil ist, wenn der durch die Drossel fließende erwünschte asymmetrische Strom eine Frequenz f₀ aufweist, wie es bei der Signalübertragung über das Versorgungsnetz der Fall sein kann.

Die genannten Beispieile für Parallrl- bzw. Serienschwingkreis aus Kapazität und Induktivität zudem, falls die Induktivität eine Wicklung mit einem eigenen Kern ist, ein lastabhängiges Verhalten der an der Hilfswicklung angeschlossenen Schaltung erzeugen.

In einem nicht-erfindungsmäßen Beispiel ist die sich ändernde Impedanz ein aktives Bauelement, das steuerbar ist. Als solches aktives Bauelement kommt beispielsweise ein Transistor in Betracht, wobei die Emitter-Kollektor-Strecke des Transistors in Reihe zu einem Widerstand zwischen Eingang und Ausgang der Hilfswicklung geschaltet wird. Ein solcher Transistor kann beispielsweise basisseitig mittels einer Regelung angesteuert werden, die einen an den zur Drossel führenden Leitungen gemessenen Istwert einer asymmetrischen Störung mit einem erwünschten Sollwert vergleicht, und entsprechend die Emitter-Kollektor-Strecke des Transistors über die Basis ansteuert und somit einen durch die Regelung gesteuerten Einfluß der Hilfswicklung auf die Drossel ausübt.

Bei der erfindungsgmäßen Schaltungsanordnung sind die Eingänge der Wicklungen der stromkompensierten Drossel an die Phasen bzw. den Null-Leiter eines Netzes angeschlossen sind und die Ausgänge der Wicklungen mit einer Funkstörquelle verbunden.

Eine solche Schaltungsanordnung hat den Vorteil, daß aufgrund der erfindungsgemäßen stromkompensierten Drossel, deren Hilfswicklung mit einer sich verändernden Impedanz verschaltet ist, eine wirksame Entkopplung der von der Funkstörquelle erzeugten Störungen vom Netz, abhängig von beispielsweise der Frequenz, erzielt werden kann.

Im folgenden wird die Erfindung anhand von Ausführungsbeispielen und den dazugehörigen Figuren näher erläutert. Die in den Figuren 2, 3, 5 und 6 dargestellten Schaltungen sind nicht-erfindungsgemäße Beispiele.
- Figur 1: zeigt beispielhaft eine erfindungsgemäße stromkom- pensierte Drossel mit einer Hilfsschaltung als schematisches Schaltbild.
- Die Figuren 4 bis 6: zeigen weitere in einer stromkompensier- ten Drossel gemäß Figur 1 verwendbare Hilfsschaltungen in schematischen Schaltbildern.
- Figur 7: zeigt beispielhaft eine erfindungsgemäße Schal-tungsanordnung in einem schematischen Schaltbild.

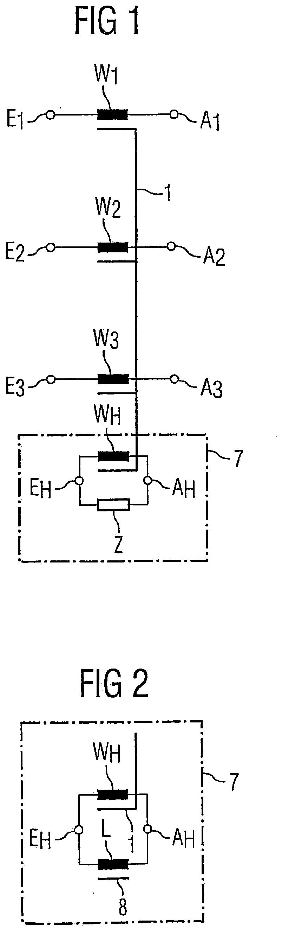

Figur 1 zeigt eine erfindungsgemäße stromkompensierte Drossel mit Wicklungen W₁, W₂, W₃. Die Wicklungen W₁, W₂, W₃ sind auf einem gemeinsamen Kern 1 gewickelt. Ein solcher Kern 1 kann beispielsweise ein Ringkern sein. Besonders vorteilhaft wirkt sich hier der Einsatz von Kernmaterialien mit einer hohen Permeabilität aus. Jede der Wicklungen W₁, W₂, W₃ weist einen Eingang E1, E2, E3 und einen Ausgang A₁, A₂, A₃ auf. Des weiteren weist die stromkompensierte Drossel eine Hilfsschaltung 7 auf, welche eine Hilfswicklung W_{H} umfaßt. Die Hilfswicklung W_{H} ist auf den gemeinsamen Kern 1 der Drossel gewikkelt. Sie weist einen Eingang E_{H} und einen Ausgang A_{H} auf. Zwischen dem Eingang E_{H} und dem Ausgang A_{H} ist eine sich ändernde Impedanz Z geschaltet. Bei der stromkompensierten Drossel gemäß Figur 1 sind die Wicklungen W₁, W₂, W₃ so gewickelt, daß ein symmetrischer Strom durch die Drossel lediglich eine vernachlässigbare Induktion im Kern 1 bewirkt. Bei der Hilfswicklung W_{H} ist es unerheblich, wie der Wickelsinn gewählt ist.

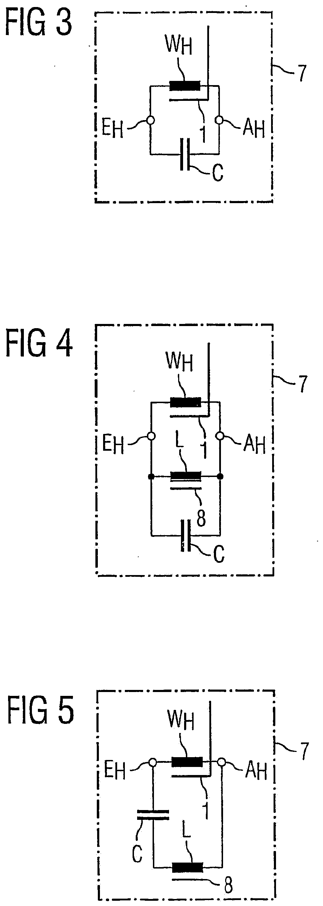

Bei dem Ausführungsbeispiel gemäß Figur 4 ist die sich ändernde Impedanz ein Parallelschwingkreis einer Induktivität L mit eigenem Kern 8 und einer Kapazität C.

Bei dem Beispiel gemäß Figur 5 ist die sich ändernde Impedanz ein Serienschwingkreis aus einer Kapazität C und einer Induktivität L. Die Induktivität L gemäß Figur 5 kann beispielsweise als Spule mit einem eigenen Kern 8 ausgeführt sein, wodurch ein vom Strom durch die Drossel abhängiges Verhalten bzw. vom Strom durch die Hilfswicklung W_{H} abhängiges Verhalten der Hilfswicklung W_{H} erzeugt werden kann.

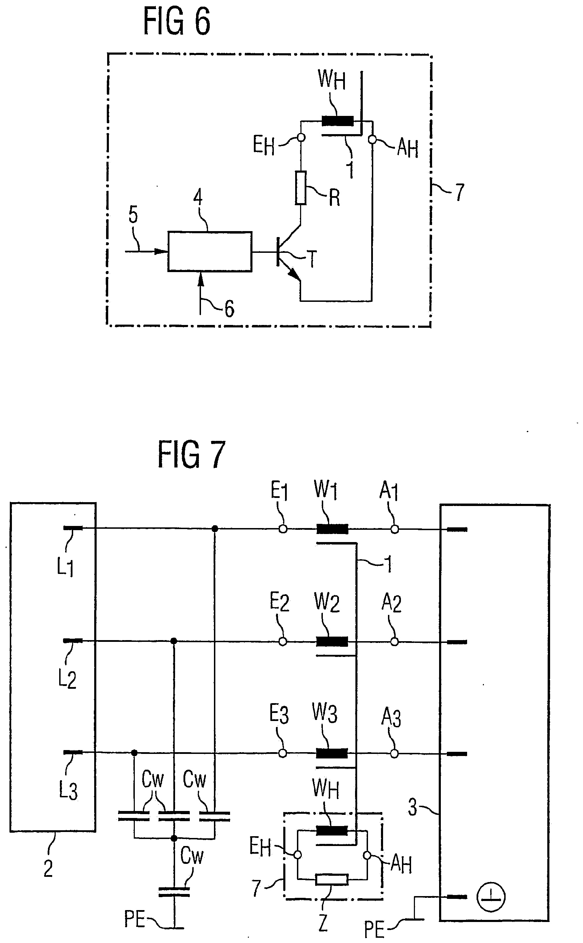

Figur 6 zeigt als weiteres Beispiel eine Hilfsschaltung 7 zur Verwendung in einer Anordnung gemäß Figur 1, bei der die veränderbare Impedanz eine Reihenschaltung aus einem Widerstand R und der Emitter-Kollektor-Strecke eines Transistors T ist. Der Transistor T kann basisseitig von einem Regler 4 angesteuert werden, der einen Istwert 5 mit einem Sollwert 6 vergleicht und den Widerstand der Emitter-Kollektor-Strecke des Transistors T auf einen geeigneten Wert 5 stellt. Der Istwert 5 kann beispielsweise die an der Drossel gemessene asymmetrische Störung sein. Der Sollwert 6 kann beispielsweise die optimale, mit Hilfe der Hilfswicklung W_{H} einstellbare Sättigung der Drossel sein.

Figur 7 zeigt eine Schaltungsanordnung mit einer erfindungsgemäßen stromkompensierten Drossel gemäß Figur 1, wobei die Eingänge E₁, E₂, E₃ der Wicklungen W₁, W₂, W₃ mit den Phasen L₁, L₂ , L₃ eines Netzes 2 verbunden sind. Ausgangseitig ist die stromkompensierte Drossel mit einer Funkstörquelle 3 verbunden. Eine solche Funkstörquelle 3 kann beispielsweise ein Umrichter sein. Dabei sind insbesondere die Ausgänge A₁, A₂, A₃ der Wicklungen W₁, W₂, W₃ mit der Funkstörquelle 3 verbunden. Figur 2 bezieht sich auf eine stromkompensierte Dreifachdrossel. Ebenso kann die Erfindung mit einer stromkompensierten Zweifachdrossel realisiert werden, wobei dann die Drossel eingangsseitig mit der Phase und dem Nulleiter eines Netzes verbunden ist. Gemäß Figur 7 sind noch weitere Kapazitäten C_{W} vorgesehen, die die Dämpfung der von der Funkstörquelle 3 kommenden Störströme verbessern. Die weiteren Kapazitäten C_{W} sind mit einer Erde PE verbunden, mit der ebenfalls die Funkstörquelle 3 verbunden ist.

Eine stromkompensierte Dreifach-Ringkerndrossel kann beispielsweise einen ringförmigen Kern aufweisen. Auf diesem Kern sind Wicklungen W₁, W₂, W₃ aufgebracht, die alle dieselbe Anzahl Windungen aufweisen und aus einem mit einem für den geforderten Nennstrom geeigneten Draht hergestellt sind. Des weiteren weist eine beispielhafte erfindungsgemäße stromkompensierte Drossel eine Hilfswicklung W_{H} auf, mit einer Windung auf dem genannten Ringkern. Diese eine Windung ist aus einem Draht mit einem entsprechenden Querschnitt herstellt. Die veränderbare Impedanz ist in einem Beispiel realisiert durch eine weitere Wicklung auf einem Ringkern. Diese weitere Wicklung ist wiederum mit einem für die auftretende Strombelastung geeigneten Drahtquerschnitt realisiert.

Im allgemeinen kann gesagt werden, daß die erfindungsgemäße Drossel prinzipiell für jeden Strom realisiert werden kann, wobei lediglich auf den erforderlichen Drahtquerschnitt aufgrund der thermischen Auslegung zu achten wäre.

### Bezugszeichenliste

- W₁ ... W₃: Wicklungen
- E₁ ... E₃, E_{H}: Eingänge
- A₁ ... A₃, A_{H}: Ausgänge
- W_{H}: Hilfswicklung
- Z: Impedanz
- L: Induktivität
- C: Kapazität
- R: Widerstand
- T: Transistor
- L₁ ... L₃: Phasen
- C_{w}: weitere Kondensatoren
- PE: Erde
- 1: Kern
- 2: Netz
- 3: Funkstörquelle
- 4: Regler
- 5: Istwert
- 6: Sollwert
- 7: Hilfsschaltung
- 8: weiterer Kern

## Patentansprüche

1. Schaltungsanordnung mit einer stromkompensierten Drossel
- mit wenigstens zwei auf einem gemeinsamen Kern (1) angeordneten Wicklungen (W1, W2, W3), die jeweils einen Eingang (E1, E2, E3) und einen Ausgang (A1, A2, A3) aufweisen
- und mit einer zusätzlichen Hilfswicklung (WH) auf dem Kern (1), die einen Eingang (EH)und einen Ausgang (AH) aufweist,
- bei der zwischen dem Eingang (EH) und dem Ausgang (AH) der Hilfswicklung (WH) eine sich ändernde Impedanz (Z) geschaltet ist,
**dadurch gekennzeichnet,**
**dass** die Impedanz (Z) ein Parallelschwingkreis aus einer Kapazität (C) und einer Induktivität (L), die eine Spule mit eigenem Kern ist, ist,
wobei die Eingänge (E1, E2, E3) der Wicklungen (W1, W2, W3) an die Phasen (L1, L2, L3) bzw. den Null-Leiter eines Netzes (2) angeschlossen sind und die Ausgänge (A1, A2, A3) mit einer Funkstörquelle (3) verbunden sind.

2. Schaltungsanordnung nach Anspruch 1,
bei der der Kern (1) ein Ringkern ist.

## Claims

1. Circuit arrangement having a current-compensating inductor
- having at least two windings (W1, W2, W3) which are arranged on a common core (1) and each have an input (E1, E2, E3) and an output (A1, A2, A3)
- and having an additional auxiliary winding (WH) on the core (1), which auxiliary winding (WH) has an input (EH) and an output (AH),
- in which a varying impedance (Z) is connected between the input (EH) and the output (AH) of the auxiliary winding (WH),
**characterized in**
**that** the impedance (Z) is a parallel resonant circuit of a capacitance (C) and an inductance (L), which is a coil with an own core,
in which the inputs (E₁, E₂, E₃) of the windings (W₁, W₂, W₃) are connected to the phases (L₁, L₂, L₃) and to the neutral conductor of a power supply system (2) and the outputs (A1, A2, A3) are connected to a radio interference source (3).

2. Circuit arrangement according to claim 1,
in which the core (1) is a toroidal core.

## Revendications

1. Agencement de circuit comprenant une bobine de choc à compensation du courant
- comprenant au moins deux enroulements (W1, W2, W3) disposés sur un noyau (1) commun, lesquels présentent respectivement une entrée (E1, E2, E3) et une sortie (A1, A2, A3)
- et comprenant un enroulement auxiliaire (WH) supplémentaire sur le noyau (1), lequel présente une entrée (EH) et une sortie (AH),
- une impédance (Z) variable étant branchée entre l'entrée (EH) et la sortie (AH) de l'enroulement auxiliaire (WH),
**caractérisé en ce**
**que** l'impédance (Z) est un circuit oscillant parallèle composé d'une capacité (C) et d'une inductance (L) qui est une bobine dotée de son propre noyau,
les entrées (E1, E2, E3) des enroulements (W1, W2, W3) étant raccordées aux phases (L1, L2, L3) ou au conducteur neutre d'un réseau (2) et les sorties (A1, A2, A3) étant reliées avec une source de perturbations radioélectriques (3).

2. Agencement de circuit selon la revendication 1, dans lequel le noyau (1) est un noyau annulaire.
